# EUROPÄISCHE PATENTSCHRIFT

(11) **EP 1 678 733 B1**
(45) Veröffentlichungstag und Bekanntmachung des Hinweises auf die Patenterteilung: **05.03.2008**
(21) Anmeldenummer: 04761054.8
(22) Anmeldetag: 29.09.2004
(51) Int. Cl.: H01J 35/10, B23K 1/19, B23K 35/02, B23K 35/00

(54) **VERFAHREN ZUR HERSTELLUNG EINES VERBUNDKÖRPERS DURCH HOCHTEMPERATURLÖTEN EINER NICHTMETALLISCHEN KOMPONENTE MIT EINER METALLISCHEN ODER NICHTMETALLISCHEN KOMPONENTE**
METHOD FOR PRODUCTION OF A COMPOSITE BODY BY HIGH TEMPERATURE WELDING OF A NON-METALLIC COMPONENT TO A METALLIC OR NON-METALLIC COMPONENT
PROCEDE DE PRODUCTION D'UN CORPS COMPOSITE PAR SOUDAGE A HAUTE TEMPERATURE D'UN COMPOSANT NON METALLIQUE A UN COMPOSANT METALLIQUE OU NON METALLIQUE

(30) Priorität: 03.10.2003 AT 6772003
(43) Veröffentlichungstag der Anmeldung: 12.07.2006
(73) Patentinhaber: PLANSEE SE, 6600 Reutte (AT)
(72) Erfinder: RÖDHAMMER, Peter, A-6600 Ehenbichl (AT)
(86) Internationale Anmeldenummer: PCT/AT2004/000332
(87) Internationale Veröffentlichungsnummer: WO 2005/034168

(56) Entgegenhaltungen:
- AT-U1- 5 079
- GB-A- 999 818
- US-A- 3 055 465
- US-A- 5 001 019
- US-A- 5 102 747
- US-A- 5 122 422
- US-A- 5 904 287
- US-A1- 2003 006 269
- US-B1- 6 400 800
- IOKI K ET AL: "DEVELOPMENT AND HEAT LOAD EXPERIMENTS OF GRAPHITE BRAZED TO STAINLESS STEEL FOR THE FIRST WALL STRUCTURE OF FER" FUSION ENGINEERING AND DESIGN, ELSEVIER SCIENCE PUBLISHERS, AMSTERDAM, NL, Bd. 9, Nr. 1, 1. Mai 1989 (1989-05-01), Seiten 289-294, XP000033967 ISSN: 0920-3796
- FOLEY A G ET AL: "ACTIVE METAL BRAZING FOR JOINING CERAMICS TO METALS" TECHNICAL REVIEW GEC ALSTHOM, GEC ALSTHOM, PARIS, FR, Nr. 13, Februar 1994 (1994-02), Seiten 49-64, XP002065543 ISSN: 1148-2893

## Beschreibung

Gegenstand der Erfindung ist ein Verfahren zur Herstellung eines thermisch hoch belastbaren Verbundkörpers, bei dem zumindest ein Teil aus einer hochtemperaturfesten, metallischen oder nichtmetallischen Komponente mit zumindest einem Teil aus einer hochtemperaturfesten, nichtmetallischen Komponente durch Hochtemperaturlöten miteinander verbunden wird, siehe z.B. Foley A.G. et Al.: "Active metal brazing for joining Ceramics to metals" ; Technical review GEC Alsthrom, GEC Alsthrom, Paris, Fr, Nr. 13, Februar 1994 (1994-02), Seiten 49-64, XP002065543, ISSN, 1148-2893.

In der Hochtemperatur-Technik kommen häufig Verbundkörper zum Einsatz, die aus einem Verbund von hochtemperaturfesten, nichtmetallischen Komponenten untereinander, z.B. keramischen oder kohlenstoffhaltigen Werkstoffen, oder mit hochtemperaturfesten, metallischen Werkstoffen, bestehen. Solche Verbunde werden unter anderem in der Luft- und Raumfahrt, in der Energietechnik, der Lichttechnik, dem Hochtemperaturofenbau, und in der Röntgendiagnostik eingesetzt. Im Falle des häufig angewandten Verlötens derartiger Werkstoffpaarungen ist zu berücksichtigen, dass nichtmetallische Werkstoffe herstellungsbedingt vielfach porös sind, mit einem Bereich der offenen Porosität bis zu 15 %.

Bei den hohen Löttemperaturen zur Herstellung der Verbundkörper kommt es in aller Regel zu einer Reaktion des Lotmaterials mit den Werkstoffen der zu verlötenden Komponenten, und zwar auf Grund eines Anlösens der Werkstoffe durch die Lotschmelze während eines verhältnismäßig kurzen Zeitraumes sowie durch Diffusion, bedingt durch das Aufheizen, Halten und Abkühlen auf bzw. von der Löttemperatur während eines deutlich längeren Zeitraumes. In manchen Fällen führt dies zu positiven Nebeneffekten, z.B. zur Erhöhung der sogenannten Remeltingtemperatur (des Überschreitens der Liquiduslinie beim Hochfahren der Temperatur) als Maß für die maximale Einsatztemperatur. Meist gibt es jedoch auch nachteilige Auswirkungen auf die Eigenschaften der entstehenden legierten Lotschicht und/oder der von der Reaktion mit dem Lot betroffenen Komponenten. Insbesondere kann es zu unerwünschten Reaktionen des Lotes mit Bestandteilen des nichtmetallischen Verbundpartners kommen, z.B. im Falle eines Ti- oder Zr-Lotes durch Bildung von Karbiden oder mit Evolution von gasförmigen Verbindungen wie etwa CO.

Beim Einsatz der gelöteten Verbundkörper bei hohen Temperaturen setzt sich der Prozess der gegenseitigen Durchmischung durch Diffusion weiter fort, wobei insbesondere Elemente mit hoher Diffusionsrate (C, N, Si, B, Ti, etc.) von den Verbundpartnern ins Lot oder umgekehrt diffundieren und zu einer raschen Alterung (Versprödung, Porenbildung) der betroffenen Werkstoffe führen können.

Beispielsweise beim Löten mit Ti (Schmelztemperatur ca. 1670°C) werden in der Regel Löttemperaturen zwischen 1700°C und 1750°C eingestellt. Beispielsweise bei der Verwendung von Mo als metallische Komponente entsteht hier eine Lotschicht aus einem Mo/Ti-Mischkristall, mit einer Aufschmelztemperatur (Remelting-Temperatur) etwa gleich der Löttemperatur. Der Mo-Gehalt in der Ti-Schmelze liegt je nach Löttemperatur zwischen 5 Atom% und 10 Atom%. Beim Löten von Mo-Legierungen mit Titanlot kommt es durch die Ti-Schmelze auch zu einer Anlösung der Legierungspartner (z.B. bei der Mo-Legierung MHC von Zr, Hf, C und O). Bei Verwendung von Graphit als nichtmetallische Komponente wird durch die Ti-Schmelze aus dem Graphit in erheblichem Umfang C gelöst (ca. 1,5 Atom%), der sich in Form von Karbiden im Lot bzw. als Karbidschicht an der Grenzfläche zum Graphit abscheidet (typische Stärke der TiC-Grenzschicht zum Graphit nach der Lötung 30 - 40 µm).
Diese Karbidschicht behindert signifikant den Wärmetransport und senkt durch ihre Werkstoffeigenschaften (hoher E-Modul, sehr geringe Kerbzähigkeit) die Verbundfestigkeit.

Bei verschiedenen Lotwerkstoffen, insbesondere bei Zr und Ti kommt es zu einer Infiltration des porösen Graphit, wodurch ein Metall- und in kurzer Folge ein Karbidskelett im Graphit entsteht. Diese Infiltrationszone stellt insbesondere nach einem thermischen Zyklieren eine Schwachstelle in der Hochtemperaturfestigkeit der Verbundkörper dar.

Vielfach stellt bei Verbundkörpern die durch Löten hergestellt werden, die unkontrollierte Ausbildung von Lunkern in der Lotzone ein ungelöstes Problem dar. Diese Lunker sind häufig kugelige Mikroporen mit Durchmessern bis zur Dicke der sich ausbildenden Lotzone (typisch 50 -150 µm), zum Teil größere fladenförmige Blasen mit Erstreckung bis zu einigen Millimetern. Dadurch wird der seitens der Anwendung in der Regel erforderliche gute Wärmeübergang zwischen Metall und Graphit behindert, aber auch die Festigkeit der Verbindung herabgesetzt. Ansammlungen von Mikroporen oder größere Einzellunker führen also zum Ausschuss.

Zwei Ursachen sind nach geltender Lehrmeinung für die Entstehung der Lunker verantwortlich. Die Mikroporen entstehen einerseits durch den Einschluss von Gasblasen in die erstarrende Schmelze. Im Hochvakuum können sich Gase bilden durch Desorption aus dem Inneren des Graphit (als CO oder CHₓ), aber auch durch Anlösung von C und/oder O aus dem Metall bzw. dem Graphit in das Lotmetall mit darauffolgender Evolution als CO. Dieses Problem tritt verstärkt auf bei neueren dispersionsverfestigten Mo-Legierungen als metallische Komponente wie z.B. MHC mit seinen deutlich höheren O- und C-Gehalten. Die makroskopischen Lunker andererseits sind überwiegend auf Lotmangel, verursacht durch Versickern des Lotes im unterschiedlich porösen Graphit, zurückzuführen.

Die DE-OS 21 18 425 beschreibt einen thermisch hochbelastbaren Verbundkörper in Form einer Drehanode für Röntgenröhren. An einem rondenförmigen überwiegend aus Molybdän bestehenden metallischen Grundkörper sind ein oder mehrere Teile aus Graphit angelötet, wobei als Lotmaterial beispielsweise Hafnium oder Zirkonium eingesetzt wird. Die Oberfläche des metallischen Grundkörpers wird dabei vor dem Verlöten mit einer 0,1 -1 mm dicken Schicht aus Tantal oder Wolfram versehen, um eutektische Schmelzreaktionen des metallischen Grundkörpers mit dem Lotwerkstoff zu vermeiden. Nachteilig dabei ist, dass Lunker im Lot durch Desorption von Gasen aus dem Graphit und eine Versprödung der Lötverbindung durch die Anlösung von C aus dem Graphit nicht verhindert werden können.

In der EP 0 399 621 B1 wird ein Verbundkörper aus Graphit und aus einer karbidbildenden hochschmelzenden Metallkomponente beschrieben, wobei zwischen Graphit und Metallkomponente eine mindestens 5-lagige Zwischenschicht angeordnet ist. Die Zwischenschicht besteht angrenzend an den Graphit aus einer ersten Lage aus einem keine Karbide bildenden Metall. Anschließend an diese Lage sind mindestens zwei Doppellagen angeordnet, wobei eine Doppellage aus einer Lage aus einem oder mehreren Karbide bildenden Metallen bzw. aus deren Karbiden oder Mischkarbiden, und aus einer Lage aus einem keine Karbide bildenden Metall oder dessen Legierungen besteht. Typischerweise wird diese Zwischenschicht mit 9 - 13 Einzellagen mit Schichtstärken der Einzellagen zwischen 2 - 5 µm hergestellt und dient in erster Linie als Diffusionssperrschicht zwischen dem Graphit und der vorzugsweise über ein Beschichtungsverfahren aufgebrachten hochschmelzenden Metallkomponente. Nachteilig dabei ist, dass bei der Herstellung eines Verbundkörpers, der durch Hochtemperaturlöten hergestellt wird, eine derartige Zwischenschicht, aufgrund der Viellagigkeit und der damit verbundenen dünnen Schichtstärken über viele Einzellagen hinweg durch die Lotschmelze aufgelöst wird, wodurch die Sperrwirkung dieser Zwischenschicht gegenüber Kohlenstoffdiffusion aus dem Graphit weitgehend aufgehoben wird. Damit steigt wieder die Wahrscheinlichkeit der Lunkerbildung im Lot. Auch ist es unwirtschaftlich, die aus teuren nichtkarbidbildenden Metallen wie Re, Ir, Ru oder Pt bestehenden Einzellagen durch ihre Auflösung in der Lotschmelze bei gleichzeitigem Verlust ihrer Funktion aufzuopfem.

Das AT GM 5.079 beschreibt ein Verfahren zur Herstellung eines Bauteilverbundes durch Fügen von einzelnen Komponenten aus nichtmetallischen und metallischen Hochtemperaturwerkstoffen. Vor dem Fügen der einzelnen Komponenten wird auf die Oberfläche der nichtmetallischen Komponente eine gasdichte, 10 bis 2000 µm dicke Metallfolie durch einen Kannungsprozess und anschließendes Matrizen- oder Isostatisches Pressen aufgebracht. Das Verfahren ist in erster Linie zur Herstellung von Verbundbauteilen mit Kühlmittelkanälen ausgerichtet, welche durch die Metallfolie gegenüber dem durchfließenden Kühlmedium abgedichtet werden sollen. Vorteilhafterweise werden die einzelnen Komponenten der Verbundbauteile nach dem Einkannen der nichtmetallischen Komponente miteinander verschweißt oder in einer gemeinsamen Kanne durch Heißpressen oder isostatisches Heißpressen miteinander verbunden. Zusätzlich ist zwar auch Löten als mögliches Verfahren zum Verbinden der einzelnen Komponenten aufgeführt, es wird jedoch auf die begrenzte Anwendbarkeit dieses Fügeverfahrens aufgrund von möglichen Anlösungen der Metallfolie durch die Lotschmelze hingewiesen.
Grundsätzlich ist es bei diesem Verfahren zur Herstellung eines Bauteilverbundes von Nachteil, dass die Metallfolie nicht nur an den zu fügenden Oberflächen der nichtmetallischen Komponenten, sondern auch auf allen anderen Oberflächen vorhanden ist und je nach Anwendungsfall des Bauteilverbundes von diesen Oberflächen unter Umständen wieder entfernt werden muss.

Die Aufgabe der vorliegenden Erfindung ist es daher ein wirtschaftliches Verfahren zur Herstellung eines thermisch hoch belastbaren Verbundkörpers aus nichtmetallischen bzw. metallischen und nichtmetallischen Komponenten mittels Hochtemperaturlötens zu schaffen, bei dem Festigkeit und Alterungsbeständigkeit des Verbundes gegenüber dem Stand der Technik erhöht und die Wahrscheinlichkeit für das Auftreten von Fehlern im Lötverbund, insbesondere auch die Bildung von Lunkern in der Lötzone, weitestgehend unabhängig von der Beschaffenheit der Verbundpartner deutlich abgesenkt wird. Gleichzeitig soll das Lötverfahren vereinfacht werden und dazu geeignet sein, eine Vielzahl von Werkstoffkombinationen aus hochtemperaturfesten, nichtmetallischen Komponenten untereinander bzw. in Verbindung mit hochschmelzenden, metallischen Komponenten unter Verwendung von handelsüblichen Lotwerkstoffen bei von den speziellen Werkstoffkombinationen weitgehend unabhängigen Lötverbindungen, miteinander zu verbinden.

Erfindungsgemäß wird dies dadurch erreicht, dass auf die zu verlötende Oberfläche jeder nichtmetallischen Komponente vor dem Verlöten eine gegenüber der Lotschmelze dichte, metallische Sperrschicht aus einem oder mehreren Elementen aus der Gruppe V, Nb, Ta, Cr, Mo, W, Ti, Zr, Hf und deren Legierungen abgeschieden wird, und dass Lotmaterial, Sperrschicht und Lötbedingungen dermaßen aufeinander abgestimmt werden, dass die metallische Sperrschicht während des Lötvorganges zumindest teilweise im festen Zustand verbleibt, so dass sie nach der Lötung zumindest über einen überwiegenden Anteil der Lötfläche noch in einer Stärke von mindestens 10 µm vorliegt.

Die metallische Sperrschicht wird dabei mit an sich bekannten Beschichtungsverfahren so abgeschieden, dass sie gegenüber Gasen und Lotschmelze weitgehend undurchlässig ist. Die Zusammensetzung der Sperrschicht und ihre jeweilige Stärke werden unter Bezugnahme auf bekannte Zwei- oder Mehrstoff-Phasendiagramme so gewählt, dass die Schicht unter Lötbedingungen hinreichend stabil gegenüber Anlösungen durch die Lotschmelze sowie Reaktionen mit der jeweiligen nichtmetallischen Komponente ist. Hinreichend stabil bedeutet, dass nach Abschluss des Lötprozesses die metallische Sperrschicht am weitaus überwiegenden Anteil der Lötfläche zwischen der Oberfläche der nichtmetallischen Komponente und Lotschicht in einer Reststärke von mindestens 10 µm noch durchgehend vorhanden ist.

Mit Hilfe des erfindungsgemäßen Verfahrens wird durch Fortfall bzw. Verringerung von Fremdphasen, insbesondere von spröden Fremdphasen wie etwa Karbiden, im Bereich der Lötverbindung der Wärmeübergang zwischen den einzelnen, nichtmetallischen bzw. metallischen Komponenten verbessert und die thermische Zyklierbarkeit des Lötverbundes über die Lebensdauer des Verbundkörpers hinweg sichergestellt. Aus wirtschaftlicher Sicht beseitigt das erfindungsgemäße Verfahren erhebliche Ausschussrisiken bei der Herstellung eines einwandfreien Lötverbundes, die durch herstelltechnisch gegebene Schwankungen in der Porosität und der Gasbelegung der nichtmetallischen Komponenten gegeben sind.

Als Grundwerkstoff der zu verlötenden metallischen Komponente kommen alle für den Einsatz bei hohen Temperaturen geeigneten Metalle, insbesondere die hochschmelzenden Metalle Ti, Zr, Hf, V, Nb, Ta, Cr, Mo, W, und Re und deren Legierungen bzw. Verbindungen in Betracht.

Die nichtmetallische bzw. nichtmetallischen Komponenten umfassen alle als Wärmesenke, Wärmezwischenspeicher und/oder Wärmestrahler geeigneten nichtmetallischen Werkstoffe, nach dem heutigen Stand der Technik, vor allem Graphit, Diamant, kohlefaserverstärkten Kohlenstoff, SiC, C-SiC, B₄C, AIN und Si₃N₄, sie sind aber nicht auf die genannten Werkstoffe beschränkt.

Das Material für die Sperrschicht wird entsprechend der zu beschichtenden nichtmetallischen Komponente und dem Lotwerkstoff derart ausgewählt, dass bei Löttemperatur keine bzw. eine nur auf einen geringen Anteil der Schichtstärke begrenzte Schmelzreaktion mit der nichtmetallischen Komponente stattfindet. Darüber hinaus soll die Sperrschicht durch die Lotschmelze gut benetzbar sein, aber eine Schmelzreaktion mit der Lotschmelze nur begrenzt auftreten. Ebenso ist bei der Auswahl zu berücksichtigen, dass für die Werkstoffeigenschaften nachteilige Diffusionsreaktionen im Einsatz soweit als möglich vermieden werden.

Die zur Beschichtung der nichtmetallischen Komponenten eingesetzten Werkstoffe werden also in Hinblick auf den Schmelzpunkt bzw. das Schmelzintervall und auf die Gefügeeigenschaften des Zwei- bzw. Mehrstoffsystems ausgewählt, das sich bei Lötbedingungen zwischen Lotmaterial und metallischer Sperrschicht einstellt.
Es ist klar, dass die gewünschte Funktion der Sperrschicht nur gegeben sein kann, wenn der Schmelzpunkt der Sperrschicht oberhalb der Löttemperatur liegt, so dass die Verwendung gleicher Werkstoffe für Sperrschicht und Lotmaterial ausgeschlossen ist.

Wesentlich für den Erfindungsgedanken ist das Aufrechterhalten der durch die metallische Sperrschicht gebildeten festen Phasengrenze Sperrschicht /Lotschmelze sowie Sperrschicht/nichtmetallische Komponente während des Lötvorganges.
Somit wird es möglich, auch sehr unterschiedliche Werkstoffe unter weitestgehend konstanten Verfahrensvorschriften zu verlöten und in allen diesen Fällen die im Wesentlichen gleiche Zusammensetzung des Lotes sowie den gleichen Lotaufbau zu erzielen.

Für den Fachmann überraschend hat sich herausgestellt, dass trotz des auf Grund von Temperaturgradienten innerhalb der Bauteile nicht zeitgleich eintretenden Erschmelzens des Lotes und trotz Materialtransportes durch Konvektion innerhalb der Lotschmelze die Anlösung der Sperrschicht durch die Lotschmelze bis auf wenige Prozent genau parallel zur Oberfläche der beschichteten Komponente erfolgt, wodurch bereits bei vergleichsweise dünnen Sperrschichten mit Stärken im Bereich von etwa 15 - 30 % der Lotstärke eine verlässliche Sperrwirkung gegenüber der Lotschmelze gewährleistet werden kann. Erst damit war die Voraussetzung zur Umsetzung des Erfindungsgedankens in ein wirtschaftliches und reproduzierbares Lötverfahren gegeben.

In der folgenden Tabelle sind beispielhaft Kombinationen von Werkstoffen der Sperrschicht und des Lotwerkstoffes angeführt, die sich für das erfindungsgemäße Verlöten von Graphit mit Molybdänbasislegierungen als geeignet erwiesen haben. Die dort genannten Lotstärken umfassen einen für das Verlöten planarer Teile üblichen Bereich. Falls aus bestimmtem Gründen wie etwa Bauteilgeometrie höhere Lotstärken erforderlich bzw. geringere zulässig sind, können die Stärken der Sperrschicht unter Maßgabe deren Dichtigkeit gegenüber der Lotschmelze entsprechend angepasst werden. Alle Parameter der Tabelle (Schichtdicken, Löttemperaturen) sind beispielhaft in Hinblick auf handelsübliche Hochleistungsgraphite mit deren Porosität, Oberflächenqualität und Reaktivität sowie auf die Temperaturregelung handelsüblicher Lötöfen angegeben. Sie stellen somit lediglich Beispiele einer sehr großen Anzahl von Realisierungsmöglichkeiten der Erfindung dar.
Der Fachmann wird aus der Beschreibung der Erfindung unschwer Richtlinien für die Parameterauswahl bei anderen Werkstoffkombinationen ableiten können.

| Zwischenschicht | Dicke Zwischenschicht µm | Sperrschicht | Dicke Sperrschicht µm | Lötfolie | Dicke Lötfolie µm | Trennschicht | Dicke Trennschicht µm | Löttemperatur °C | Erstarrungs-temperatur °C |
|---|---|---|---|---|---|---|---|---|---|
| | | | | | | | | | |
| | | W | 50 | Ti | 100 | | | 1720 | ca 1680 |
| | | | | | | | | | |
| | | W | 50 | Zr | 100 | | | 1780 | 1735 |
| | | | | | | | | | |
| | | W | 30 | Pt | 30 | | | 1810 | 1800 |
| | | | | | | | | | |
| | | Mo | 40 | Ti | 100 | | | 1720 | ca 1695 |
| | | | | | | | | | |
| | | Nb | 40 | Ti | 100 | | | 1720 | ca 1710 |
| | | | | | | | | | |
| | | Ta | 30 | Ti | 40 | | | 1700 | ca 1680 |
| | | | | | | | | | |
| | | | | | | | | | |
| | | | | | | | | | |
| | | W | 50 | Ni | 50 | | | 1500 | ca 1490 |
| | | | | | | | | | |
| | | Ta + Ti | 50+2 | Cu | 50 | | | 1140 | ca 1120 |
| | | | | | | | | | |
| Re | 20 | W | 30 | Ti | 100 | W | 30 | 1720 | ca 1680 |
| | | | | | | | | | |
| TaC | 10 | W | 50 | Zr | 100 | | | 1780 | 1735 |
| | | | | | | | | | |

Die vorteilhaften Effekte der metallischen Sperrschicht wirken in einer Synergie zusammen, die in diesem Ausmaß auch für den Fachmann nicht vorauszusehen war. Die nachfolgende Auflistung der zusammenwirkenden vorteilhaften Effekte soll diese Synergie verdeutlichen.
- Durch die dichte metallische Sperrschicht kann das Lot die nichtmetallische Komponente nicht infiltrieren. Statt mit z.B. 200 - 300 µm starken Lotfolien kann daher mit 50 -150 µm starken Lotfolien gearbeitet werden.
- Durch das verbesserte Lotmengenmanagement kann die unkontrollierte Benetzung der zu verlötenden Komponenten mit ausfließendem Lot soweit unterbunden werden, dass vielfach auf eine Nachbearbeitung des verlöteten Verbundkörper verzichtet werden kann.
- Die trotz der mehr als doppelt so hohen Lotmengen bei Standardlötung auftretenden Lunker im Lot werden wirksam unterbunden. Ausschuss durch Lunker wird praktisch eliminiert.
- Die durch Gasevolution aus der nichtmetallischen Komponente entstehende Mikroporosität wird etwa um einen Faktor 10 verringert.

Die folgenden vorteilhaften Effekte treten bei Einsatz eines C-haltigen Werkstoffes für die nichtmetallische(n) Komponente(n) auf.
- Die Karbidbildung an der Grenzfläche zur kohlenstoffhaltigen Komponente wird verhindert bzw. um etwa einen Faktor 10 reduziert.
- Die Wärmeleitfähigkeit der Lötzone steigt durch Abwesenheit bzw. Reduktion der Karbidschicht sowie der Porosität.
- Die Abnahme der Festigkeit des Lötverbundes durch Karbidbildung während des Lötprozesses verlangsamt sich um mehr als einen Faktor 100.
- Für Lote mit einem Lot-Kohlenstoff-Eutektikum erhöht sich erfindungsgemäß die Aufschmelztemperatur, im Fall von Ti-Lot um ca. 30°C, im Fall von Zr-Lot um ca. 50°C.

Die Festlegung der Dicke der metallischen Sperrschicht richtet sich u.a. nach Lotmenge, Gleichmäßigkeit der Lotverteilung, allenfalls vorhandener Restporosität der Sperrschicht und Anlösung der Sperrschicht durch die Lotschmelze. Dabei ist insbesondere zu beachten, dass sich auch bei bestimmten nichtmetallischen Komponenten in Kontakt mit dem Werkstoff der Sperrschicht bei den herrschenden Lötbedingungen ein niedrigschmelzendes Eutektikum ausbilden kann, wodurch die Sperrschicht gegebenenfalls in starkem Maße angelöst werden könnte.

In seiner einfachsten Form besteht das erfinderische Verfahren im Aufbringen einer einkomponentigen Metallschicht als Sperrschicht für die Lotschmelze auf die nichtmetallischen Komponenten. Im Falle von Graphit als nichtmetallische Komponente sowie Molybdän als metallische Komponente kommen hier vorzugsweise W und Ta in Betracht. Bei Verwendung einer Ti-Lotfolie mit einer Stärke von 100 µm reicht bei einer Löttemperatur von ca. 1710°C eine 30 - 40 µm dicke W-Schicht aus, um nach Anlösung der Sperrschicht durch das erschmolzene Lot bis in eine Tiefe von ca. 10 µm, durch die verbleibende Sperrschicht von 20 - 30 µm Stärke die Infiltration des Lotes in den Graphit bzw. die Bildung von Karbidphasen im Lot zu verhindern. Bei Verwendung einer Ta-Sperrschicht liegt die Dicke der durch Feststoffdiffusion gebildeten Tantalkarbidschicht bei üblichen Lötbedingungen im Bereich von 5 µm, im Vergleich zu einer sich bei Standardlötung ohne metallische Sperrschicht durch Schmelzreaktion und Diffusion bildenden, etwa 40 µm dicken TiC-Schicht. Auch das weitere Wachstum der TaC-Schicht im Einsatz bei hohen Temperaturen ist gegenüber dem TiC deutlich verlangsamt. Bei der Verlötung von Molybdän und Graphit mit Titanlot ergibt sich eine Lotzusammensetzung Ti-Mo-W (bzw. Ti-Mo-Ta), das entstehende legierte Lot erstarrt als Mischkristall knapp unterhalb der Löttemperatur. Im Falle der entsprechenden Lötung ohne metallische Sperrschicht würde sich oberhalb der ca. 40 µm dicken Ti(Mo)C-Schicht eine Lotzusammensetzung von Ti-Mo-C einstellen, mit eutektischer Erstarrung ca. 30°C unterhalb der Löttemperatur.

In einer bevorzugten Ausführung der Erfindung wird bei Verbundwerkstoffen aus nichtmetallischen und metallischen Komponenten neben der Beschichtung der nichtmetallischen Komponente mit der Sperrschicht auch die metallische Komponente mit einer Trennschicht gegenüber dem Lotwerkstoff beschichtet. Vorzugsweise besteht die Trennschicht aus demselben Werkstoff wie die Sperrschicht. Beim Vorsehen einer jeweils einlagigen Schicht aus nur einem Metall und bei gleichzeitiger Verwendung eines einkomponentigen Lotes, entsteht beim Lötprozess ein Lot aus nur zwei chemischen Elementen, wobei sich die Konzentration des im Lot angelösten Schichtwerkstoffes bei gegebener Löttemperatur aus dem Zweistoff-Phasendiagramm ablesen lässt.

So reduziert sich zum Beispiel bei einer Beschichtung, sowohl der metallischen Komponente aus Molybdän, als auch der nichtmetallischen Komponente aus Graphit, mit W und unter Verwendung einer Lötfolie aus Zr, das entstehende Lotsystem auf das Zweistoffsystem Zr-W, das im Lötprozess bei etwa 1800°C erschmilzt und als Eutektikum bei ca. 1735°C erstarrt. Im Gegensatz dazu entsteht beim Verlöten der Molybdänlegierung TZM (Legierungsbestandteile Mo, Ti, Zr, C, O) und Graphit ohne erfindungsgemäße Beschichtung und Verwendung eines Zr-Lotes, bei ca. 1700°C durch Anlösung beider Komponenten ein Lotsystem bestehend aus Zr-Mo-Ti-C-O, das dann erst bei ca. 1520°C eutektisch erstarrt.

Um mit möglichst geringen Stärken der erfindungsgemäßen Sperrschicht das Auslangen zu finden, sollte die Löslichkeit der erfindungsgemäßen Sperrschicht im Lot in der Regel unter 50 Atom% liegen, vorteilhaft im Bereich unter 10 Atom%. Letztere Beschränkung gewinnt zusätzlich an Bedeutung, wenn sich aus Gründen der Bauteilgeometrie ein örtlicher Zusammenfluss von Lotmaterial mit verstärkter lokaler Anlösung der Schicht nicht vermeiden lässt.

In der Regel sind Lotwerkstoffe nicht nur in elementarer Form, sondern bereits als Legierungen, insbesondere als solche mit eutektischer Zusammensetzung, in Form von Folien, Drähten etc verfügbar. So gibt es beispielsweise zahlreiche Lotzusammensetzungen mit Ti, Cu, Ni oder Ag als Basiswerkstoff. Hier können unter Umständen auch Legierungsbestandteile mit an sich hoher Löslichkeit im Basiswerkstoff des Lotes als Werkstoff für die Sperrschicht vorteilhaft eingesetzt werden, insbesondere wenn die Lotlegierung hinsichtlich des Schichtwerkstoffes bei Lötbedingungen weitgehend abgesättigt ist.

Lotmaterial, Lotmenge, Werkstoff der metallischen Sperrschicht und gegebenenfalls Werkstoff der Trennschicht werden gemäß dem erfinderischen Verfahren vorteilhaft so aufeinander abgestimmt, dass Schichtstärken vor dem Lötvorgang für die Sperrschicht sowie gegebenenfalls für die Trennschicht von 100 µm ausreichend sind.

Zur Abscheidung der Sperr- bzw. Trennschicht auf den zu verlötenden Flächen kommen grundsätzlich alle bekannten Beschichtungsverfahren in Betracht, die geeignet sind, unmittelbar oder in Kombination mit thermischer Nachbehandlung gut haftende, dichte Schichten mit ausreichend homogener Schichtdickenverteilung und Dicken im Bereich von einigen Mikrometern bis zu einigen 100 µm herzustellen. Das Beschichtungsverfahren ist dabei so anzupassen, dass bei den dabei herrschenden Bedingungen die zu beschichtenden Komponenten keine nachteiligen Veränderungen in Gefüge und Dimensionen erleiden.

Als vorteilhaft haben sich Verfahren erwiesen, die eine weitgehend gerichtete Beschichtung der zu verlötenden Teilflächen der nichtmetallischen bzw. metallischen Komponenten gestatten.
Mit Hilfe von Verfahren der Physikalischen-Dampf-Abscheidung (PVD) wie etwa dem Magnetronkathodenzerstäuben, lassen sich Sperr- bzw. Trennschichten mit nahezu theoretischer Dichte abscheiden, die gegenüber Gaspermeation und Schmelzdurchtritt völlig dicht sind und von der Schmelze sehr gleichmäßig, also weitgehend parallel zur Grenzfläche Schicht/Grundwerkstoff angelöst werden. Wirtschaftlich sind Schichten aus W, Ta etc. bis etwa 50 µm mit diesem Verfahren abzuscheiden. Für höhere Schichtstärken ist das Vakuumplasmaspritzen (VPS) vorteilhaft einsetzbar. Die produktionstechnisch erzielbaren Dichten erreichen hier > 98 % der theoretischen Dichte. Auch die Chemische-Dampf-Abscheidung (CVD) ist gut geeignet, dichte, gut haftende Schichten z.B. aus hochschmelzenden Metallen wirtschaftlich herzustellen.

Falls von der Anwendung her erforderlich, kann die Beschichtung durch Masken auf die Lötfläche begrenzt werden, oder aber durch mechanische Bearbeitung vor oder nach dem Löten außerhalb der Lötzone wieder entfernt werden.

Verbundeigenschaften (Haftung Schicht/Grundwerkstoff) und Schichteigenschaften (Kornform und Korngröße, offene Porosität; Reinheit) können durch eine an die Beschichtung anschließende Wärmebehandlung im Vakuum oder Schutzgas optimiert werden. Eine allenfalls verbleibende Restporosität (wie z.B. bei VPS-Schichten) im Bereich bis zu etwa 5 % kann aber in der Regel toleriert werden, da die in die offenen Poren eindringende Schmelze durch Anlösungsprozesse nach kurzer Wegstrecke ihre Gleichgewichtskonzentration erreicht und somit der Anlösungsprozess zum Stillstand kommt.

Besonders vorteilhaft ist das erfindungsgemäße Verfahren zur Herstellung von Drehanoden für Röntgenröhren anzuwenden.
Zur löttechnischen Verbindung der Einzelbauteile derartiger Drehanoden, bestehend aus einem Mo-Basiswerkstoff wie z.B. TZM als Anodenteller und einem Graphitrücken, haben sich Wolfram und Tantal als besonders vorteilhafte Werkstoffe für die metallische Sperrschicht und gegebenenfalls auch für die Trennschicht erwiesen. Wolfram bildet mit Titan als Lotwerkstoff bei den für Ti-Lot üblichen Löttemperaturen von 1700° - 1750°C eine Ti/W-Schmelze mit einem sehr niedrigen W-Gehalt von 3 - 6 Atom%, wobei sich an der Grenzfläche zum W eine an W reichere Mischkristallzone (entsprechend der Soliduslinie des Zweistoffsystems) mit ca. 5-10 Atom% W ausbildet. Bei Dicken der Ti-Lötfolie im Bereich von 50-100 µm und Löttemperaturen zwischen 1700° und 1750°C haben sich Stärken der W-Schicht auf dem Graphitrücken von ca. 30 - 60 µm als ausreichend erwiesen, um eine vollständige Auflösung der Sperrschicht durch die Ti-Schmelze zu verhindern. Im Falle einer gleichzeitigen Verwendung einer W-Trennschicht auf dem TZM-Anodenteller reduzieren sich die erforderlichen Schichtstärken der jeweiligen W-Schichten.

Im Falle der Verwendung von Zr als Lot für derartige Drehanoden hat sich Wolfram als besonders vorteilhaftes Material für die Sperrschicht bzw. Trennschicht herausgestellt.
Mit Zr-Lot bildet die W-Schicht ein Eutektikum mit einem Schmelzpunkt von 1735°C. Als Löttemperaturen haben sich hier 1780 - 1800°C als geeignet herausgestellt. Beim Schmelzen des Zr werden etwa 10 -12 Atom% W angelöst. Schichtstärken für die Sperrschicht in der Größenordnung von 50 - 70 µm sind ausreichend. Das durch die Sperrschicht entstandene Lotgefüge Zr-W ist bei dem erfindungsgemäßen Verfahren wesentlich feinkörniger als das nach dem Lötverfahren gemäß dem Stand der Technik ohne Sperrschicht entstehende Mo-Zr-Gefüge, insbesondere gilt dies für die W₂Zr-Kristalle gegenüber den hier entstehenden Mo₂Zr-Kristallen.

Eine weitere vorteilhafte Ausführungsform des erfinderischen Verfahrens besteht im Aufbringen von Zwischenschichten mit speziellen Funktionen. So kann vor der eigentlichen metallischen Sperrschicht eine Zwischenschicht auf die nichtmetallischen Komponenten aufgebracht werden, die im Lötprozess ebenfalls im festen Zustand verbleibt, und deren Aufgabe es ist, auf Grund ihrer chemischen, physikalischen und mechanischen Eigenschaften den Verbund der metallischen Sperrschicht mit den nichtmetallischen Komponenten bzw. seine Beständigkeit zu verbessern. Im Hinblick auf z.B. einen kohlenstoffhaltigen Werkstoff als nichtmetallische Komponente, kann zunächst etwa eine dünne Zwischenschicht aus einem Karbid (z.B. NbC oder TaC), einem karbidbildenden Metall (z.B. Nb ocer Ta) oder aus einem nichtkarbidbildenden Metall (z.B. Ru oder Ir) als Diffusionssperrschicht gegen Kohlenstoffdiffusion abgeschieden werden. Darauf wird dann die metallische Sperrschicht gegenüber der Lotschmelze gemäß der gegenständlichen Erfindung aufgebracht. Die Schichtmaterialien für Zwischenschicht und Sperrschicht sind derart aufeinander sowie auf damit in Kontakt stehende Werkstoffe abgestimmt, dass diese Schichten im Lötprozess zumindest überwiegend im festen Zustand verbleiben.

In einer bevorzugten Ausführung wird demgemäss auf kohlenstoffhaltigen nichtmetallischen Komponenten Ta in einer Stärke von 10 - 20 µm abgeschieden, gefolgt von einer 30 - 60 µm dicken Schicht aus Wolfram. Beim Lötprozess bildet sich an der Grenzfläche zum kohlenstoffhaltigen Substrat eine ca. 3 - 5 µm dicke Tantalkarbidschicht, die auch im Langzeiteinsatz des Verbundkörpers nur mehr langsam weiterwächst und eine noch wirksamere Sperre gegenüber Kohlenstoffdiffusion in den Lotwerkstoff bildet als die im Langzeiteinsatz weiterwachsende WC/W₂C-Reaktonsschicht die sich ohne die Ta-Zwischenschicht beim Lötprozess ausbilden würde.

In einer weiteren vorteilhaften Ausführung des erfinderischen Lotaufbaus wird auf die metallische Sperrschicht und/oder Trennschicht eine weitere Schicht abgeschieden, die zumindest einen der Bestandteile des Lotes enthält. Durch ihr Erschmelzen beim Lötprozess bewirkt diese weitere Schicht die verzögerungsfreie Benetzung durch die Lotschmelze und vergleichmäßigt die Anlösungsreaktionen durch die Lotschmelze auf der gesamten Lötfläche. Dadurch kann auch die zu beobachtende lokale Anlösung im Lotmeniskus deutlich reduziert und als Konsequenz die Stärke der metallischen Sperrschicht und gegebenenfalls auch der Trennschicht zur metallischen Komponente hin abgesenkt werden. Ein zusätzlicher Vorteil ergibt sich daraus bei Lotsystemen mit Ausbildung eines Eutektikums im Lötprozess (z.B. im System Zr-W), da durch die zusätzlich aufgebrachte lotverwandte Schicht die Lotschmelze unmittelbar oberhalb des eutektischen Schmelzpunktes verzögerungsfrei einsetzt, sodass die Löttemperatur z.B. im Fall W-Zr um etwa 30°C abgesenkt werden kann und keine weitere Haltezeit bei Erreichen der Löttemperatur notwendig ist.

Bei geeigneten geometrischen Ausformungen des Lötverbundes kann es vorteilhaft sein, das gesamte Lotmaterial in Form einer Schicht der erforderlichen Stärke auf die metallische Sperrschicht oder gegebenenfalls zu etwa gleichen Teilen auf Sperrschicht und Trennschicht abzuscheiden. Dies gilt insbesondere für komplexe Lötflächen wie z.B. zu verlötende Gewindeflächen.

Neben Drehanoden für Röntgenröhren finden sich weitere vorteilhafte Anwendungen für die erfindungsgemäß hergestellten Verbundkörper im Bereich der Energietechnik, insbesondere der Fusionstechnik. Die in Forschungsreaktoren eingesetzten Plasmagefäße umfassen zahlreiche Komponenten (Divertoren, Erste-Wand-Kacheln etc.), die als Verbunde von hochschmelzenden Metallen und nichtmetallischen Werkstoffen (insbesondere kohlenstoffhaltigen Werkstoffen) ausgeführt sind.

Für den Fachmann ist klar, dass das erfindungsgemäße Verfahren für weitere analoge Werkstoffverbunde und Einsatzbedingungen vorteilhaft anwendbar ist, beispielsweise für Bauteile aus der Luft- und Raumfahrt (Hitzeschilder, Brennkammern etc.) sowie im Hochtemperaturanlagenbau.

Im Folgenden wird das erfinderische Verfahren an Hand von Herstellungsbeispielen und Figuren näher erläutert.

### Beispiel 1

Pulvermetallurgisch hergestellte Anodenteller für Drehanoden aus TZM (Molybdänlegierung mit 0,5 Gew.% Ti, 0,76 Gew.% Zr und 0,03 Gew.% C) mit einem Brennbahnbelag aus W5Re (Wolframlegierung mit 5 Gew.% Rhenium), wurden auf der Rückseite mit einem kreisringförmigen Teil aus Hochleistungsgraphit zu einer Röntgendrehanode verlötet. Der Durchmesser der Ronden betrug 160 mm, die Stärke 10 mm. Der Graphitring hatte einen Außendurchmesser von 156 mm, einen Innendurchmesser von 80 mm und eine Stärke von 45 mm. Der Graphitring wurde gemäß dem erfinderischen Verfahren auf der zu verlötenden Fläche mittels ionenunterstütztem Magnetronkathodenzerstäuben (Sputter Ion Plating) mit einer 50 µm dicken W-Schicht beschichtet. Das Löten erfolgte nach Beilegen einer mit dem Graphitring flächengleichen Ti-Folie mit einer Stärke von 100 µm. Die Lötung wurde bei 1725°C im Hochvakuum durchgeführt (Auffahrgeschwindigkeit 15°C/min; Haltezeit 2 min; Abkühlen ohne Temperaturregelung).

Nach dem Löten blieb gemäß Schliffanalyse die Wolframsperrschicht durchgehend mit einer Stärke von 35 +/- 5 µm erhalten. Im Bereich der Lotmenisken betrug die Reststärke der W-Schicht zumindest 15 µm. Entlang der Grenzfläche der W-Schicht zum Graphit bildete sich während des Lötvorgangs durch Kohlenstoffdiffusion eine ca. 8 µm dicke, durchgehende Wolframkarbidschicht. Im Schliff wurde keine Infiltration des Graphit mit dem Ti-Lot beobachtet, ebenso keine karbidischen Ausscheidungen im Lot. Das Lot bestand gemäß Mikroanalyse im Rasterelektronenmikroskop aus einem Ti-Mo-W-Mischkristall mit Mo- bzw. W-Gehalten von je 3 - 5 Atom%. Der Flächenanteil an Mikroporen in der Lötzone betrug ca. 0,4 %. Lunker waren nicht zu beobachten.

Die Lötzone wurde auf die Auswirkung der Verbundspannungen, die sich beim Abkühlen nach dem Löten aufbauen, durch Messung der Akustischen Emission an den gelöteten Drehanoden in der Abkühlphase, untersucht. Mit dieser Methode kann das Auftreten von Mikrorissen bzw. Mikroscherungen im Lötverbund mittels dadurch ausgelöster akustischer Signale im Hochfrequenzbereich nachgewiesen werden. Die Zahl der so nachgewiesenen Mikroschädigungen lag zwischen 300 und 500.

### Beispiel 2

Auf pulvermetallurgischem Weg hergestellte Anoden für Drehanoden aus MHC (Molybdänlegierung mit 1 Gew.% Hf, 0,7 Gew. % Zr, 0,1 Gew.% C und 0,05 Gew.% O) mit einem Belag aus W5Re wurden mit einem kreisringförmigen Rücken aus Hochleistungsgraphit zu einer Röntgendrehanode verlötet. Die Abmessungen waren die gleichen wie in Beispiel 1 angegeben. Gemäß einer besonders vorteilhaften Ausführung des erfinderischen Verfahrens wurde die Graphitkomponente vor dem Verlöten mittels
Vakuum-Lichtbogen-Ionenplattieren mit einer 20 µm dicken Ta-Schicht als Diffusionssperrschicht beschichtet, gefolgt von einer 30 µm dicken W-Sperrschicht. Auch die zu verlötende MHC-Ronde wurde auf der zu verlötenden Seite mit einer 30 µm Trennschicht aus W beschichtet. Die Verlötung erfolgte mit einer Ti-Lötfolie mit Stärke 100 µm wie in Beispiel 1 beschrieben.

Die Schliffanalyse unmittelbar nach dem Löten zeigte auf der Graphitscheibe eine ca. 5 µm starke Tantalkarbidschicht, gebildet durch Feststoffdiffusion zwischen Graphit und Tantalschicht. Daran schließt sich die metallisch verbliebene Ta-Schicht mit einer Reststärke von ca. 15 µm sowie die Wolframschicht mit einer Reststärke von ca. 20 µm an. Die Lotschicht selbst besteht im Wesentlichen aus einem Ti/W-Mischkristall, mit einem W-Anteil von ca. 5 %. Karbidphasen waren im Lot nicht zu beobachten. Der Flächenanteil der Mikroporen betrug in dieser Ausführung 0,2 %. Makroporen traten nicht auf.

Messungen der Akustischen Emission ergaben eine Anzahl zwischen 50 und 100 Mikroschädigungen.

### Beispiel 3

Für Vergleichzwecke wurden Anodenteller für Drehanoden nach dem Stand der Technik hergestellt. Die Anodenteller waren wie in den Beispielen 1 und 2 aufgebaut. Sowohl die Graphitteile als auch die TZM-Ronden wurden gemäß dem Stand der Technik unbeschichtet eingesetzt. Die Verlötung erfolgte unter denselben Lötbedingungen wie in Beispiel 1, jedoch mit einer 250 µm starken Lötfolie aus Titan, wie dies erfahrungsgemäß notwendig ist, um den Lotverlust durch Infiltration des Graphit auszugleichen.

Die Schliffanalyse unmittelbar nach dem Löten zeigte an der Grenzfläche Titan-Lot / Graphit eine Titankarbidschicht von 35 µm Stärke. Auch innerhalb des Lotquerschnittes waren karbidische Einschlüsse zu erkennen.
Der Flächenanteil der Mikroporen in der Lötzone betrug 3,4 %.
Die Auswertung der Akustischen Emission ergab zwischen 3000 und 5000 Mikroschädigungen. Diese deutlich erhöhte Anzahl gegenüber den erfindungsgemäß hergestellten Drehanoden lässt sich auf Mikroschädigungen des Verbundes an den Grenzflächen der Titankarbidschicht zum Graphit sowie von infiltrierten TiC Einlagerungen mit der Graphitmatrix zurückführen.

Die nach den Beispielen 1 bis 3 hergestellten Drehanoden wurden durch Langzeitglühungen im Hochvakuum (1500°C / 20h) thermisch gealtert und danach Schliffbilder der Lötzone hergestellt.
- Figur 1: zeigt das Schliffbild der Lötzone einer erfindungsgemäß nach Beispiel 2 hergestellten Drehanode, und zwar nach dem Löten (Figur 1 a) bzw. nach einer Auslagerung bei 1500°C während 20 h (Figur 1 b) jeweils in 160-facher Vergrößerung
- Figur 2: zeigt das Schliffbild der Lötzone einer entsprechend dem Stand der Technik nach Beispiel 3 hergestellten Referenzdrehanode, ebenfalls nach dem Löten (Figur 2a) bzw. nach einer Auslagerung bei 1500°C während 20 h (Figur 2b) jeweils in 160-facher Vergrößerung

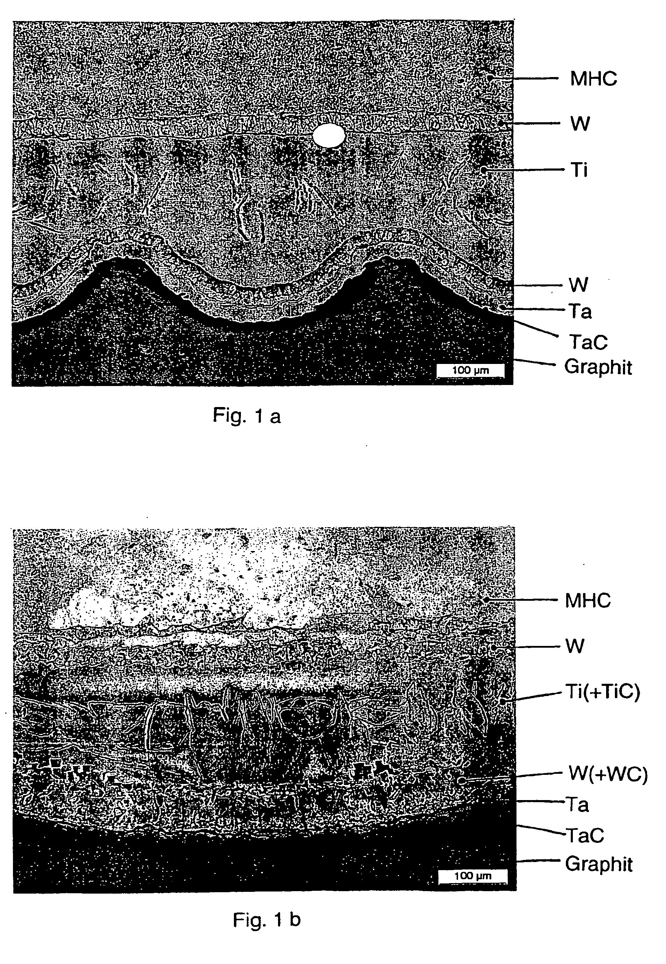

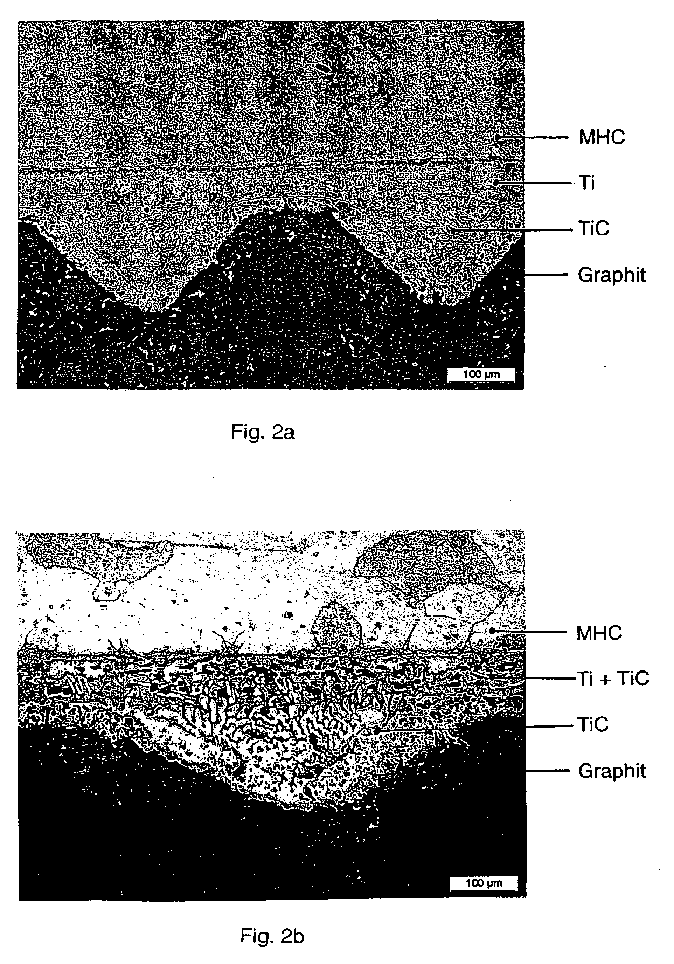

Aus Figur 1 ist deutlich zu erkennen, dass die Lötzone aus W/Ti der erfindungsgemäß hergestellten Drehanode weitgehend porenfrei mit nur vereinzelten Karbideinlagerungen ist. Hingegen lässt die Lötzone der nach dem Stand der Technik hergestellten Drehanode (Figur 2) deutlich eine ausgeprägte Porosität sowie einen hohen Anteil an Karbidphasen in der Lotschicht erkennen.

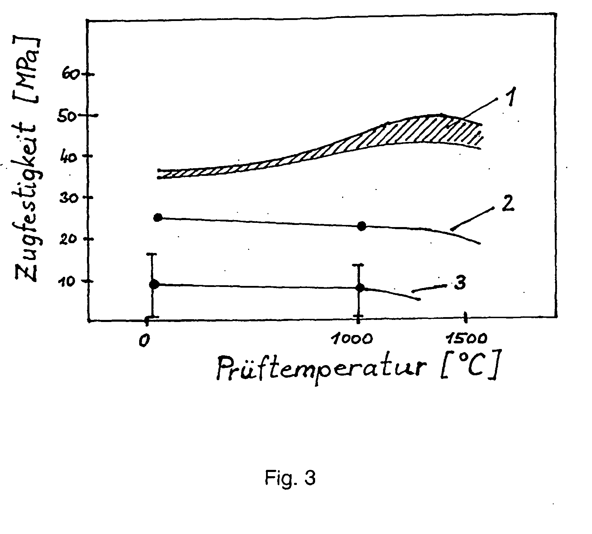

- Figur 3: zeigt die Auswertung von Zugprüfungen an erfindungsgemäß nach Beispiel 2 und entsprechend dem Stand der Technik nach Beispiel 3 hergestellten Drehanoden in verschiedenen Alterungszuständen.

Die Kurven 1 zeigen die Auswertung unmittelbar nach der Lötung der sowohl nach Beispiel 2, als auch nach Beispiel 3 hergestellten Drehanoden.
Die Kurve 2 zeigt die Auswertung der erfindungsgemäß nach Beispiel 2 hergestellten Drehanoden nach einer Auslagerung bei 1500°C während 20 h. Die Kurve 3 zeigt die Auswertung von Drehanoden die nach dem Stand der Technik entsprechen Beispiel 3 hergestellt wurden nach einer Auslagerung bei 1500°C während 20 h.
Die Mehrzahl der nach Beispiel 3 entsprechend dem Stand der Technik hergestellten Proben war nach der Alterung 1500°C/20 h so versprödet, dass sie bereits bei der mechanischen Bearbeitung zur Herstellung der Zugproben zu Bruch ging. Beim Rest lag die Zugfestigkeit zwischen 0 und 15 MPa. Für die erfindungsgemäß nach Beispiel 2 hergestellten Proben lag die Zugfestigkeit bei 24 +/- 2 MPa.

Für den Fachmann belegen die hier vorgelegten Ergebnisse, dass die erfindungsgemäß hergestellten Verbunddrehanoden im Einsatz deutlich höher thermisch belastbar sind und hinsichtlich ihrer Verbundfestigkeit wesentlich langsamer altern als solche, die heute nach dem Stand der Technik hergestellt werden.

Die hier angeführten Beispiele dienen nur der Veranschaulichung der Erfindung.
Es ist für den Fachmann klar, dass das erfinderische Verfahren zur löttechnischen Verbindung einer großen Zahl weiterer nichtmetallischer Komponenten unter sich oder mit metallischen Hochtemperaturwerkstoffen in Kombination mit einer Vielzahl von Loten, darunter auch mehrkomponentigen Loten, im Sinne der Lehre des gegenständlichen Patentes erfolgreich eingesetzt werden kann.

## Patentansprüche

1. Verfahren zur Herstellung eines thermisch hoch belastbaren Verbundkörpers, bei dem zumindest ein Teil aus einer hochtemperaturfesten, metallischen oder nichtmetallischen Komponente mit zumindest einem Teil aus einer hochtemperaturfesten, nichtmetallischen Komponente durch Hochtemperaturlöten miteinander verbunden wird,
wobei
auf die zu verlötende Oberfläche jeder nichtmetallischen Komponente vor dem Verlöten eine gegenüber der Lotschmelze dichte, metallische Sperrschicht aus einem oder mehreren Elementen aus der Gruppe V, Nb, Ta, Cr, Mo, W, Ti, Zr, Hf und deren Legierungen abgeschieden wird, **dadurch gekennzeichnet, dass** Lotmaterial, Sperrschicht und Lötbedingungen dermaßen aufeinander abgestimmt werden, dass die metallische Sperrschicht während des Lötvorganges zumindest teilweise im festen Zustand verbleibt, so dass sie nach der Lötung zumindest über einen überwiegenden Anteil der Lötfläche noch in einer Stärke von mindestens
10 µm vorliegt.

2. Verfahren zur Herstellung eines Verbundkörpers nach Anspruch 1, **dadurch gekennzeichnet, dass** die metallische Sperrschicht nach der Lötung eine Schichtstärke im Bereich von 25 µm - 90 µm aufweist.

3. Verfahren zur Herstellung eines Verbundkörpers nach Anspruch 1 oder 2, **dadurch gekennzeichnet, dass** das Lot aus einem oder mehreren Elementen aus der Gruppe Ti, Zr, Hf und deren Legierungen besteht.

4. Verfahren zur Herstellung eines Verbundkörpers nach einem der Ansprüche 1 bis 3, wobei die nichtmetallische(n) Komponente(n) aus Graphit oder einem Kohlenstoff enthaltenden Material besteht, **dadurch gekennzeichnet, dass** vor dem Aufbringen der metallischen Sperrschicht in einem ersten Schritt auf die zu verlötende Oberfläche(n) eine Zwischenschicht aus einem nichtkarbidbildenden Metall oder aus einem Karbid oder Nitrid von einem oder mehreren der Metalle Ti, Zr, Hf, V, Nb, Ta, Cr, Mo, W aufgebracht wird.

5. Verfahren zur Herstellung eines Verbundkörpers nach Anspruch 4, **dadurch gekennzeichnet, dass** die Zwischenschicht eine Schichtstärke von 5 - 30 µm aufweist.

6. Verfahren zur Herstellung eines Verbundkörpers nach einem der Ansprüche 1 bis 5, wobei zumindest ein Teil aus einer hochtemperaturfesten, metallischen Komponente mit zumindest einem Teil aus einer nichtmetallischen Komponente verbunden wird, **dadurch gekennzeichnet, dass** die metallische Komponente vor dem Löten mit einer Trennschicht versehen wird, die beim nachfolgenden Lötprozess durch geeignete Wahl von Lotwerkstoff und Lötbedingen zumindest in einer Stärke von 10 µm erhalten bleibt.

7. Verfahren zur Herstellung eines Verbundkörpers nach Anspruch 6, **dadurch gekennzeichnet, dass** die Trennschicht gleich aufgebaut ist, wie die metallische Sperrschicht auf der nichtmetallischen Komponente.

8. Verfahren zur Herstellung eines Verbundkörpers nach einem der Ansprüche 1 bis 7, **dadurch gekennzeichnet, dass** der Lotwerkstoff zumindest teilweise als Beschichtung auf der metallischen Sperrschicht und/oder der Trennschicht aufgebracht wird.

9. Verfahren zur Herstellung eines Verbundkörpers nach einem der Ansprüche 1 bis 8, wobei zumindest ein Teil aus einer metallischen Komponente aus W, Mo oder einer Legierung dieser Metalle mit zumindest einem Teil aus einer nichtmetallischen Komponente aus Graphit oder einem Kohlenstoff enthaltenden Material mit einem Lotwerkstoff aus Ti verbunden wird, **dadurch gekennzeichnet, dass** auf der nichtmetallischen Komponente vor dem Verlöten eine 30 - 80 µm starke Sperrschicht aus W aufgebracht wird.

10. Verfahren zur Herstellung eines Verbundkörpers nach einem der Ansprüche 1 bis 8, wobei zumindest ein Teil aus einer metallischen Komponente aus W, Mo oder einer Legierung dieser Metalle mit zumindest einem Teil aus einer nichtmetallischen Komponente aus Graphit oder einem Kohlenstoff enthaltenden Material mit einem Lotwerkstoff aus Ti verbunden wird, **dadurch gekennzeichnet, dass** auf der nichtmetallischen Komponente vor dem Verlöten eine 30 - 80 µm dicke Sperrschicht aus Ta aufgebracht wird.

11. Verfahren zur Herstellung eines Verbundkörpers nach einem der Ansprüche 1 bis 8, wobei zumindest ein Teil aus einer metallischen Komponente aus W, Mo oder einer Legierung dieser Metalle mit zumindest einem Teil aus einer nichtmetallischen Komponente aus Graphit oder einem Kohlenstoff enthaltenden Material mit einem Lotwerkstoff aus Zr verbunden wird, **dadurch gekennzeichnet, dass** auf der nichtmetallischen Komponente vor dem Verlöten eine 30 - 80 µm starke Sperrschicht aus W oder Ta aufgebracht wird.

12. Verfahren zur Herstellung eines Verbundkörpers nach einem der Ansprüche 9 bis 11, **dadurch gekennzeichnet, dass** die metallische Komponente vor dem Löten mit einer Trennschicht versehen wird, welche dieselbe Zusammensetzung aufweist wie die Sperrschicht auf der nichtmetallischen Komponente.

13. Verfahren zur Herstellung eines Verbundkörpers nach einem der Ansprüche 9 bis 12, **dadurch gekennzeichnet, dass** der Verbundkörper eine Röntgenröhrendrehanode ist.

## Claims

1. A process for producing a composite body capable of withstanding high thermal loads, wherein at least one part of a high-temperature-resistant, metallic or non-metallic component is joined to at least one part of a high-temperature-resistant, non-metallic component by high-temperature soldering,
wherein
a metallic barrier layer, impervious to the solder melt, consisting of one or more elements from the group comprising V, Nb, Ta, Cr, Mo, W, Ti, Zr, Hf and alloys thereof is deposited, prior to the joining by soldering, onto the surface of each non-metallic component to be joined by soldering, **characterised in that** the solder material, the barrier layer and the soldering conditions are matched to one another in such a way that during the soldering operation the metallic barrier layer remains at least partially in the solid state, so that after the soldering it is still present in a thickness of at least 10 µm at least over a predominant proportion of the soldering surface.

2. Process for producing a composite body according to Claim 1, **characterised in that** the metallic barrier layer exhibits a layer thickness within the range from 25 µm to 90 µm after the soldering.

3. Process for producing a composite body according to Claim 1 or 2, **characterised in that** the solder consists of one or more elements from the group comprising Ti, Zr, Hf and alloys thereof.

4. Process for producing a composite body according to one of Claims 1 to 3, wherein the non-metallic component(s) consist(s) of graphite or of a carbon-containing material, **characterised in that** in a first step an interlayer consisting of a non-carbide-forming metal or of a carbide or nitride of one or more of the metals Ti, Zr, Hf, V, Nb, Ta, Cr, Mo, W is applied onto the surface(s) to be soldered together prior to application of the metallic barrier layer.

5. Process for producing a composite body according to Claim 4, **characterised in that** the interlayer exhibits a layer thickness of 5-30 µm.

6. Process for producing a composite body according to one of Claims 1 to 5, wherein at least one part of a high-temperature-resistant, metallic component is joined to at least one part of a non-metallic component, **characterised in that** the metallic component is provided, prior to the soldering, with a separating layer which in the course of the subsequent soldering process is preserved at least in a thickness of 10 µm by suitable choice of solder material and soldering conditions.

7. Process for producing a composite body according to Claim 6, **characterised in that** the separating layer is constructed in the same way as the metallic barrier layer on the non-metallic component.

8. Process for producing a composite body according to one of Claims 1 to 7, **characterised in that** the solder material is applied at least partially as a coating on the metallic barrier layer and/or on the separating layer.

9. Process for producing a composite body according to one of Claims 1 to 8, wherein at least one part of a metallic component consisting of W, Mo or of an alloy of these metals is joined to at least one part of a non-metallic component consisting of graphite or of a carbon-containing material with a solder material consisting of Ti, **characterised in that** a barrier layer with a thickness of 30-80 µm consisting of W is applied on the non-metallic component prior to the joining by soldering.

10. Process for producing a composite body according to one of Claims 1 to 8, wherein at least one part of a metallic component consisting of W, Mo or of an alloy of these metals is joined to at least one part of a non-metallic component consisting of graphite or of a carbon-containing material with a solder material consisting of Ti, **characterised in that** a barrier layer with a thickness of 30-80 µm consisting of Ta is applied on the non-metallic component prior to the joining by soldering.

11. Process for producing a composite body according to one of Claims 1 to 8, wherein at least one part of a metallic component consisting of W, Mo or of an alloy of these metals is joined to at least one part of a non-metallic component consisting of graphite or of a carbon-containing material with a solder material consisting of Zr, **characterised in that** a barrier layer with a thickness of 30-80 µm consisting of W or Ta is applied on the non-metallic component prior to the joining by soldering.

12. Process for producing a composite body according to one of Claims 9 to 11, **characterised in that** the metallic component is provided, prior to the soldering, with a separating layer that exhibits the same composition as the barrier layer on the non-metallic component.

13. Process for producing a composite body according to one of Claims 9 to 12, **characterised in that** the composite body is a rotating anode of an X-ray tube.

## Revendications

1. Procédé de fabrication d'un corps composite qui peut être hautement sollicité thermiquement, dans lequel au moins une partie d'un composant métallique ou non métallique résistant aux hautes températures est assemblée par brasage à haute température avec au moins une partie d'un composant non métallique résistant aux hautes températures, dans lequel une couche métallique d'arrêt étanche au bain de brasage, composée d'un ou plusieurs éléments du groupe formé par V, Nb, Ta, Cr, Mo, W, Ti, Zr, Hf et leurs alliages, est déposée avant le brasage sur la surface à braser de chaque composant non métallique,
**caractérisé en ce que** la matière de brasage, la couche d'arrêt et les conditions de brasage sont adaptées les unes aux autres pour que la couche métallique d'arrêt subsiste au moins partiellement à l'état solide pendant le processus de brasage, d'une manière telle que son épaisseur après le brasage est d'au moins 10 µm sur une majeure partie de la surface de brasage.

2. Procédé de fabrication d'un corps composite selon la revendication 1, **caractérisé en ce que** l'épaisseur de couche de la couche métallique d'arrêt est dans la plage de 25 µm à 90 µm après le brasage.

3. Procédé de fabrication d'un corps composite selon la revendication 1 ou 2, **caractérisé en ce que** la brasure se compose d'un ou plusieurs éléments du groupe formé par Ti, Zr, Hf et leurs alliages.

4. Procédé de fabrication d'un corps composite selon l'une quelconque des revendications 1 à 3, dans lequel le ou les composant(s) non métallique(s) consistent en graphite ou une matière contenant du carbone, **caractérisé en ce qu'**une couche intermédiaire formée d'un métal ne formant pas de carbure, ou d'un carbure ou d'un nitrure d'un ou plusieurs des métaux Ti, Zr, Hf, V, Nb, Ta, Cr, Mo, W, est déposée dans une première étape, avant l'application de la couche métallique d'arrêt, sur la surface à braser.

5. Procédé de fabrication d'un corps composite selon la revendication 4, **caractérisé en ce que** l'épaisseur de couche de la couche intermédiaire est comprise entre 5 et 30 µm.

6. Procédé de fabrication d'un corps composite selon l'une quelconque des revendications 1 à 5, dans lequel au moins une partie d'un composant métallique résistant aux hautes températures est assemblée avec au moins une partie d'un composant non métallique, **caractérisé en ce que** les composants métalliques sont pourvus, avant brasage, d'une couche de séparation qui garde au moins une épaisseur de 10 µm lors du processus ultérieur de brasage par l'effet d'une sélection appropriée de la matière de brasage et des conditions de brasage.

7. Procédé de fabrication d'un corps composite selon la revendication 6, **caractérisé en ce que** la structure de la couche de séparation est la même que celle de la couche métallique d'arrêt sur le composant non métallique.

8. Procédé de fabrication d'un corps composite selon l'une quelconque des revendications 1 à 7, **caractérisé en ce que** la matière de brasage est appliquée au moins en partie sous forme de revêtement sur la couche métallique d'arrêt et/ou la couche de séparation.

9. Procédé de fabrication d'un corps composite selon l'une quelconque des revendications 1 à 8, dans lequel au moins une partie d'un composant métallique en W, Mo ou un alliage de ces métaux est assemblée au moyen d'une matière de brasage de Ti avec au moins une partie d'un composant non métallique en graphite ou en matière contenant du carbone, **caractérisé en ce qu'**une couche d'arrêt d'une épaisseur de 30 à 80 µm de W est appliquée sur le composant non métallique avant le brasage.

10. Procédé de fabrication d'un corps composite selon l'une quelconque des revendications 1 à 8, dans lequel au moins une partie d'un composant métallique en W, Mo ou un alliage de ces métaux est assemblée au moyen d'une matière de brasage de Ti avec au moins une partie d'un composant non métallique en graphite ou en matière contenant du carbone, **caractérisé en ce qu'**une couche d'arrêt d'une épaisseur de 30 à 80 µm de Ta est appliquée sur le composant non métallique avant le brasage.

11. Procédé de fabrication d'un corps composite selon l'une quelconque des revendications 1 à 8, dans lequel au moins une partie d'un composant métallique en W, Mo ou un alliage de ces métaux est assemblée au moyen d'une matière de brasage de Zr avec au moins une partie d'un composant non métallique en graphite ou en matière contenant du carbone, **caractérisé en ce qu'**une couche d'arrêt d'une épaisseur de 30 à 80 µm de W ou Ta est appliquée sur le composant non métallique avant le brasage.

12. Procédé de fabrication d'un corps composite selon l'une quelconque des revendications 9 à 11, **caractérisé en ce qu'**une couche de séparation, de même composition que la couche d'arrêt appliquée sur le composant non métallique, est appliquée sur le composant métallique avant le brasage.

13. Procédé de fabrication d'un corps composite selon l'une quelconque des revendications 9 à 12, **caractérisé en ce que** le corps composite est une anode tournante de tubes à rayon X.
